# EUROPÄISCHE PATENTANMELDUNG

(11) **EP 0 964 492 A1**
(43) Veröffentlichungstag der Anmeldung: **15.12.1999**
(21) Anmeldenummer: 99810416.0
(22) Anmeldetag: 10.05.1999
(51) Int. Cl.: H02G 3/04

(54) **Klammer für einen Kabelkanal**

(30) Priorität: 10.06.1998 DE 19826035
(71) Anmelder: HILTI Aktiengesellschaft, 9494 Schaan (LI)
(72) Erfinder: Trautwein, Bernd, 86807 Buchloe (DE)
(74) Vertreter: Wildi, Roland

(57) **Zusammenfassung**

Eine Klammer für einen Kabelkanal, der an seiner offenen Seite, im Bereich der freien Enden seiner Seitenwände nach innen abragende, leistenartige Öffnungsränder aufweist, besitzt ein die offene Seite überbrückendes, längliches Brückenteil (2), das zu beiden Seiten eines Mittenabschnitts (3) abragende Klemmschenkel (4, 5) aufweist, deren freie Längsenden mit hakenartigen Anbindeteilen (8, 9) für die leistenartigen Öffnungsränder versehen sind. Dabei ragen zu beiden Seiten des Mittenabschnitts (3) wenigstens zwei Klemmschenkel (4, 5) ab, die mit Hilfe von integrierten Keilflächen (12, 13) im wesentlichen senkrecht zur Längserstreckung des Brückenteils und des Kabelkanals ausrückbar und gegen eine Rückstellkraft auseinanderspreizbar sind.

## Beschreibung

Die Erfindung betrifft eine Klammer für einen Kabelkanal gemäss dem Oberbegriff des Patentanspruchs 1.

Kabelkanäle der gattungsgemässen Art dienen üblicherweise der Aufnahme von elektrischen Kabeln und Leitungen. Sie können in Vertiefungen an Wänden, Decken oder Böden montiert sein. Oft werden sie auch an der Oberfläche von Wänden angeordnet. Die am häufigsten verwendeten Kabelkanäle weisen einen etwa U-förmigen Querschnitt auf und besitzen eine Rückwand, von der zwei Seitenwände meist etwa rechtwinklig abragen. Die der Rückwand des Kabelkanals gegenüberliegende Seite ist offen ausgebildet und erlaubt das Einlegen der Kabel. Es sind auch sogenannte Eckkanäle bekannt, die für eine Montage in der von zwei aneinanderstossenden Mauern gebildeten Ecke ausgebildet sind. Derartige Eckkanäle besitzen einen im wesentlichen dreieckförmigen Querschnitt, der von einer Rückwand und zwei im stumpfen Winkel davon abragenden Seitenwänden oder von zwei an den Längsseiten verbundenen Seitenwänden gebildet ist.

Die bekannten Kabelkanäle werden nach dem Einlegen der Kabel mit Deckeln verschlossen, die in Hinterschneidungen an der Aussenseite der freien Enden der Seitenwände verrasten. Die in den Kabelkanal eingelegten Kabel belasten die Seitenwände und drücken diese nach aussen. Dies kann zu Schwierigkeiten beim Aufsetzen und Verrasten des Deckels führen. Um den durch die eingelegten Kabel belasteten Seitenwänden eine grössere Stabilität zu verleihen, sind Klammern vorgesehen, die die Öffnung des Kabelkanals überbrücken und an leistenförmigen Rändern befestigbar sind, die im Bereich der freien Enden von der Innenseite der Seitenwände abragen und in Längsrichtung des Kabelkanals verlaufen. Aus der DE-U-79 31 274 ist eine Klammer für Kabelkanäle bekannt, die in Langlöchern in den leistenförmigen Rändern festlegbar ist. Dazu weist sie an ihren beiden Längsenden jeweils zwei durch einen Längsschlitz voneinander getrennte Rastfinger mit Rasthaken auf, die an den quer zur Längsrichtung der Schlitze verlaufenden Rändern der Langlöcher unterhaken. Die Rastfinger sind durch quer zur Längserstreckung der Klammer einwirkende Kräfte zusammendrückbar. Dadurch ist die Breite der Klammer im Bereich der Rasthaken verringerbar und die Rastfinger können wieder gelöst werden und durch das Langloch herausgeführt werden. Ein in den Schlitz zwischen die Rastfinger eingreifendes Sperrglied, das bedarfsweise ausrückbar ist, verhindert ein unbeabsichtigtes Lösen der Klammer von den Rändern.

Die bekannte Klammer ist nur an den in vorgegebenen Abständen in den Rändern vorgesehenen Langlöchern befestigbar. Eine Montage an beliebiger Stelle des Kabelkanals, beispielsweise im Bereich des Kanal- oder Deckelstosses, ist nicht möglich. Das Lösen der montierten Klammer, beispielsweise um weitere Kabel in den Kanal einzulegen, ist nur sehr umständlich zu bewerkstelligen. Um die Rastfinger zusammendrücken zu können, muss zunächst das Sperrglied aus dem Schlitz ausgerückt werden. Dazu sind beide Hände erforderlich; gegebenenfalls ist sogar ein Hilfmittel, wie beispielsweise ein Schraubenzieher oder dergleichen, erforderlich, um das Sperrglied ausrücken zu können.

Aus der DE-U-295 15 365 ist eine Klammer bekannt, die an ihren Längsenden etwa U-förmig ausgebildete Klemmabschnitte aufweist. Die leistenförmigen Ränder, die von den freien Enden der Seitenwände nach innen abragen, sind wenigstens an ihrer Oberseite mit Längsriffelungen versehen. Im Zusammenwirken mit den korrespondierend ausgebildeten Innenflächen der Klemmabschnitte bilden sie einen Rillenrastverschluss. Die Klammer weist den Vorteil auf, dass sie bei Bedarf längsverschiebbar ist und an beliebiger Stelle an den Rändern des Kanals montierbar ist. Die Montage der Klammer ist zwar relativ einfach zu bewerkstelligen. Zur Demontage, beispielsweise um weitere Kabel in den Kanal einzulegen, sind jedoch beide Hände erforderlich, um den Rillenrastverschluss zu lösen.

Aufgabe der vorliegenden Erfindung ist es daher, eine Klammer für einen Kabelkanal zu schaffen, die an beliebiger Stelle entlang der Länge des Kabelkanals einfach zu montieren ist. Die montierte Klammer soll bei Bedarf in die gewünschte Position verschiebbar sein und ein Herausfallen der in den Kanal eingelegten Kabel verhindern. Andererseits soll sichergestellt sein, dass sie, insbesondere bei geschlossenem Deckel, nicht unbeabsichtigt verrücken kann. Sie soll möglichst einfach und nur mit einer Hand wenigstens einseitig von der Schiene lösbar sein, beispielsweise um nachträglich noch weitere Kabel in den Kanal einzulegen. Die montierte Klammer soll dem belegten Kanal eine ausreichende Steifigkeit verleihen, damit die Seitenwände auf Mass gehalten werden und der Deckel mit ausreichender Klemmkraft aufgesetzt werden kann.

Die Lösung dieser Aufgaben besteht in einer Klammer für einen Kabelkanal, welche die im kennzeichnenden Abschnitt angeführten Merkmale aufweist. Die erfindungsgemässe Klammer ist für einen Kabelkanal bestimmt, der an seiner offenen Seite, im Bereich der freien Enden seiner Seitenwände nach innen abragende, leistenartige Öffnungsränder aufweist. Die Klammer besitzt ein die offene Seite überbrückendes, längliches Brückenteil, das zu beiden Seiten eines Mittenabschnitts abragende Klemmschenkel aufweist. Wenigstens einer der Klemmschenkel ist an seinem freien Längsende mit einem hakenartigen Anbindeteil für die leistenartigen Öffnungsränder versehen. Dabei ragen von jeder Längsseite des Mittenabschnitts wenigstens zwei Klemmschenkel ab, die mit Hilfe von integrierten Keilflächen im wesentlichen senkrecht zur Längserstreckung des Brückenteils und des Kabelkanals ausrückbar und gegen eine Rückstellkraft auseinanderspreizbar sind.

Während bei den bekannten Klammern für Kabelkanäle das Lösen der an den Öffnungsrändern befestigten Klammer nur relativ mühsam und meist nur mit zwei Händen zu bewerkstelligen ist, lässt sich die erfindungsgemässe Klammer ganz einfach mit einer Hand mit Hilfe von integrierten Keilflächen lösen. Die Keilflächen bewirken im Bedarfsfall, beispielsweise wenn der Kabelkanal mit weiteren Kabeln nachbelegt werden soll, dass die auf einer Seite des Brückenteils angeordneten, zusammengehörigen Klemmschenkel auseinandergespreizt und vom Öffnungsrand abgehoben werden. Das Auseinanderspreizen erfolgt dabei gegen eine Rückstellkraft, die durch die Elastizität der Klemmschenkel hervorgerufen ist und die Klemmschenkel normalerweise in der Schliessstellung verharren lässt. Dadurch ist sichergestellt, dass die montierte Klammer sich nicht unbeabsichtigt von den Öffnungsrändern lösen kann. Die Klemmkraft der montierten Klammer ist ausreichend gross, um dem belegten Kanal eine ausreichende Steifigkeit zu verleihen, damit die Seitenwände auf Mass gehalten werden und der Deckel mit ausreichender Klemmkraft aufgesetzt werden kann.

Für die einfache und zuverlässige Bedienbarkeit der Klammer mit nur einer Hand erweist es sich von Vorteil, wenn die integrierten Keilflächen mit der Quererstreckung des Brückenteils einen Winkel einschliessen, der zwischen etwa 10° und etwa 45°, vorzugsweise zwischen 15° und 35° liegt.

In einer Ausführungsvariante der Erfindung sind die integrierten Keilflächen von zusammenwirkenden Gleitflächen an den einander zugewandten Längsseiten der Klemmschenkel gebildet. Zum Auseinanderspreizen der Klemmschenkel müssen diese nur quer zur Längserstreckung des Brückenteils zusammengepresst werden. Die dabei aneinander abgleitenden schrägen Gleitflächen bewirken, dass die Klemmschenkel im wesentlichen senkrecht zur Längserstreckung des Brückenteils und des Kabelkanals vom jeweiligen Öffnungsrand wegbewegt werden und die Verhakung gelöst wird.

Während es für die Funktion der erfindungsgemässen Klammer ausreicht, zu beiden Seiten des Mittenabschnitts jeweils nur zwei zusammenwirkende Klemmschenkel paarweise nebeneinander anzuordnen, kann die Klemmwirkung und die Handhabung der Klemmschenkel noch weiter verbessert werden, indem beidseits des Mittenabschnitts je zwei periphere Klemmschenkel abragen, die parallel zu den beiden Längsseiten eines zentralen Klemmschenkels nebeneinander verlaufen, der einen im wesentlichen trapezförmigen Querschnitt aufweist. Die peripheren Klemmschenkel sind vorzugsweise symmetrisch zueinander ausgebildet. Sie verlaufen beidseits der Längsseiten eines zentralen Klemmschenkels, die mit den Gleitflächen ausgebildet sind. Werden die peripheren Klemmschenkel gegen den zentralen Klemmschenkel gedrückt, gleiten die einander zugewandten schrägen Gleitflächen aneinander ab. Dadurch wird der zentrale Klemmschenkel in die eine Richtung und werden die peripheren Klemmschenkel in die entgegengesetzte Richtung vom Öffnungsrand wegbewegt. Dabei wird die Verhakung aufgehoben, und die Klammer kann beispielsweise für eine nachträgliche Befüllung mit weiteren Kabeln einseitig angehoben oder entfernt werden.

Bei einer alternativen Ausführungsvariante der Erfindung erstrecken sich beidseits des Mittenabschnitts jeweils zwei übereinander angeordnete, zentrale Klemmschenkel. Parallel zu den beiden Längsseiten der Klemmschenkel sind Spreizbügel angeordnet, die vom Mittenabschnitt abragen und V-förmig zueinander angeordnete Schrägflächen aufweisen, welche die integrierten Keilflächen bilden und zwischen die zentralen Längsschenkel eingreifen. Um die zentralen Klemmschenkel auseinanderzuspreizen, genügt es, die Spreizbügel mit ihren schrägen Gleitflächen gegen die Längsseiten der Klemmschenkel zu pressen. Vorzugsweise besitzen die paarweise zusammengehörigen Klemmschenkel einen im wesentlichen trapezförmigen Querschnitt und weisen sie an ihren Längsseiten Gleitflächen auf, die derart geneigt sind, dass sie eine im wesentlichen V-förmige Nut begrenzen. Die V-förmigen Gleitflächen der Spreizbügel greifen in die Nuten an den Längsseiten der Klemmschenkel ein und wirken bei Bedarf mit den schrägen Gleitflächen an den Längsseiten der Klemmschenkel zusammen.

Zur Erleichterung der Handhabung der Klammer können die den Gleitflächen abgewandten Längsseiten der Klemmschenkel bzw. Spreizbügel mit Griffmulden versehen sein. Die Griffmulden sind vorzugsweise derart angeordnet, dass die Klemmschenkel mit dem geringsten Kraftaufwand auseinanderspreizbar sind.

Für die zuverlässige Funktion der Klammer genügt es, wenn wenigstens einer der Klemmschenkel auf jeder Längsseite des Mittenabschnitts mit hakenartigen Anbindeteilen ausgestattet ist. Zur Erhöhung der Klemmwirkung und zur noch besseren Versteifung der Kabelkanalwände sind vorzugsweise alle Klemmschenkel mit hakenartigen Anbindeteilen versehen. Die Anbindeteile sind dabei vorzugsweise von den abgewinkelten Endabschnitten der Klemmschenkel gebildet, welche korrespondierend ausgebildete Rastvorsprünge an der Ober- und Unterseite der Öffnungsränder übergreifen.

Für die Funktion der Klammer erweist es sich von Vorteil, wenn die Länge wenigstens zweier zusammengehöriger Klemmschenkel verschieden ist und die abgewinkelten Endabschnitte Rastvorsprünge übergreifen, die in unterschiedlicher Entfernung von der zugehörigen Seitenwand an der Ober- bzw. Unterseite der Öffnungsränder verlaufen. Durch die erfindungsgemässe Ausbildung der Klammer und der Öffnungsränder wird das Befestigen und das Lösen der Klammer erleichtert. Die unterschiedliche Länge der Klemmschenkel bietet vor allem auch Sicherheit gegen ein unbeabsichtigtes Lösen einer einseitig abgehobenen Klammer vom gegenüberliegenden Öffnungsrand. Besonders vorteilhaft erweist sich dabei eine Ausführungsvariante, bei der ein in Gebrauchslage oberer Klemmschenkel eine grössere Länge aufweist als ein zugehöriger unterer Klemmschenkel.

Für die Herstellung und die Kosten der erfindungsgemässen Klammer erweist es sich von Vorteil, wenn das Brückenteil ein Kunststoffteil ist, das vorzugsweise im Spritzgiessverfahren herstellbar ist.

Im folgenden wird die Erfindung unter Bezugnahme auf in den Figuren schematisch dargestellte Ausführungsbeispiele näher erläutert. Es zeigen in nicht massstabsgetreuer Darstellung:
- Fig. 1: einen Abschnitt eines ersten Ausführungsbeispiels der erfindungsgemässen Klammer in perspektivischer Darstellung;
- Fig. 2: eine Draufsicht auf die Klammer gemäss Fig. 1;
- Fig. 3: die Klammer aus Fig. 1 im montierten Zustand;
- Fig. 4: ein zweites Ausführungsbeispiel der Klammer in einer Darstellung gemäss Fig. 1;
- Fig. 5: eine Draufsicht auf die Klammer gemäss Fig. 4; und
- Fig. 6 - 8: Funktionsprinzipe von Klammern gemäss der Erfindung.

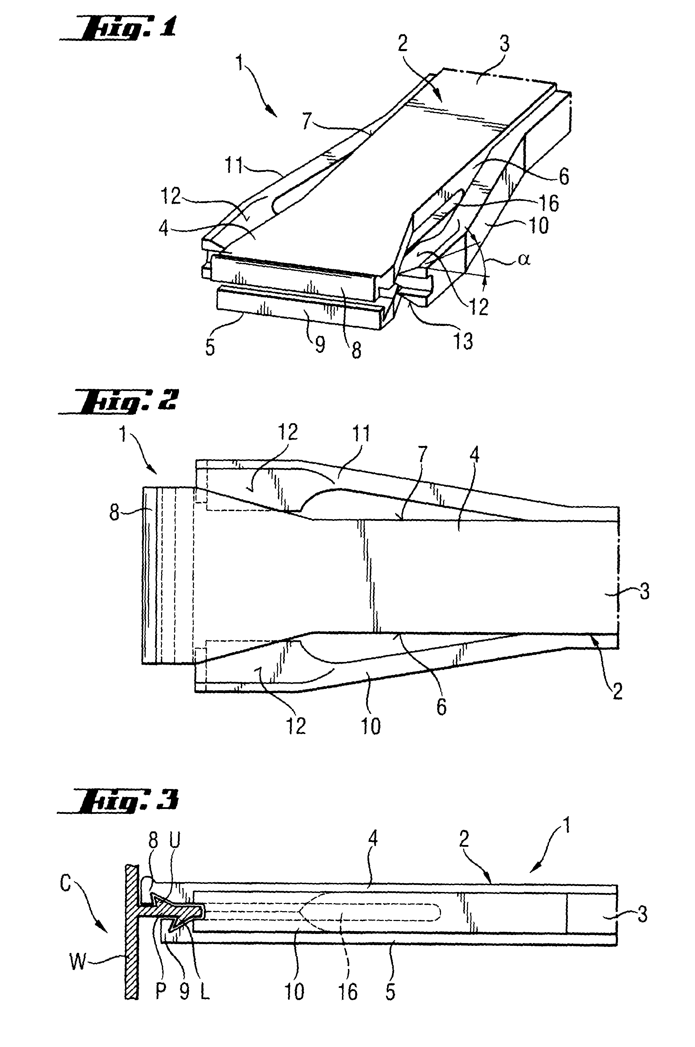

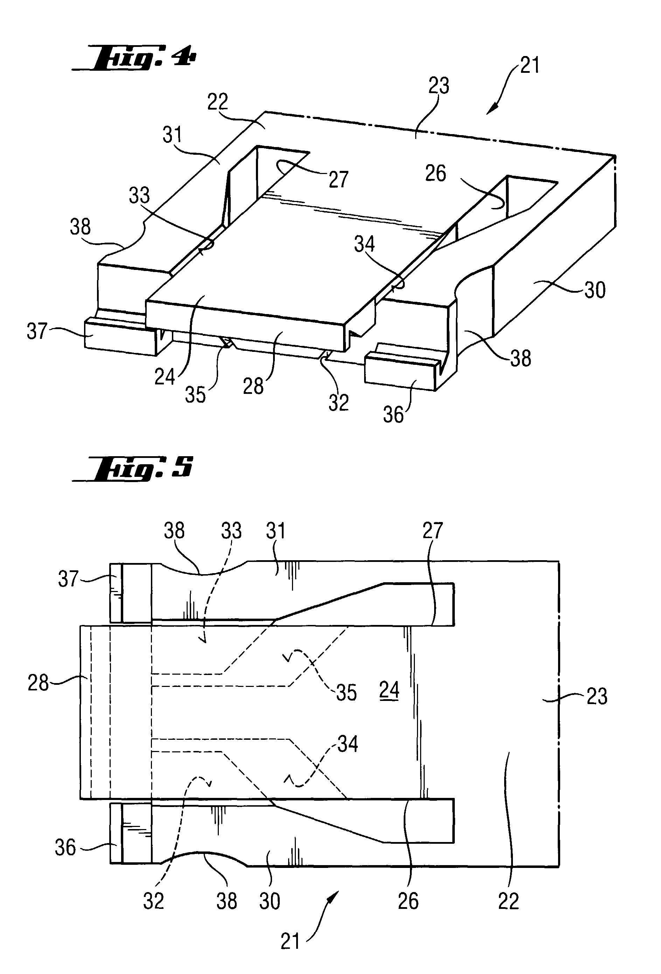

Die in den Fig. 1 - 3 beispielsweise dargestellte Klammer ist gesamthaft mit dem Bezugszeichen 1 versehen. Aus Gründen der Übersichtlichkeit zeigen die Darstellungen jeweils nur eine Hälfte der Längserstreckung der Klammer 1. Die zweite Hälfte der Klammer ist identisch ausgebildet. Die Klammer weist ein Brückenteil 2 auf, dessen Längserstreckung im montierten Zustand quer zur Längserstreckung eines Kabelkanals C verläuft. Beidseits eines Mittenabschnitts 3 des Brückenteils 2 erstreckt sich ein Paar von übereinander angeordneten Klemmschenkeln 4, 5, an deren freien Vorderenden hakenförmige Anbindeteile 8, 9 vorgesehen sind. Die hakenförmigen Anbindeteile. 8, 9 sind von den zueinander umgebogenen freien Enden der Klemmschenkel 4, 5 gebildet. Die Klemmschenkel 4, 5 sind durch einen in Längsrichtung des Brückenteils 2 verlaufenden Spalt 16 voneinander getrennt. Zwei federnde Spreizbügel 10, 11, die vom Mittenabschnitt 3 abragen, erstrecken sich etwa parallel zu den Längsseiten 6, 7 der Klemmschenkel 4, 5. Im Bereich ihrer freien Enden weisen die Spreizbügel 10, 11 V-förmig zueinander geneigte schräge Gleitflächen 12, 13 auf, die keilförmig in den Spalt 16 zwischen den Klemmschenkeln 4, 5 ragen.

Im montierten Zustand der Klammer übergreifen die hakenförmigen Anbindeteile 8, 9 der Klemmschenkel 4, 5 korrespondierend ausgebildete Rastvorsprünge U, L, die an der Oberseite und der Unterseite von Öffnungsrändern P des Kabelkanals C vorgesehen sind. Die Öffnungsränder P ragen etwa senkrecht von den Seitenwänden W des Kabelkanals C ab, verlaufen parallel zur Längserstreckung der Seitenwände W und beranden die Einlegeöffnung des Kabelkanals C. Wie aus Fig. 3 ersichtlich ist, können die an der Oberseite vorgesehenen, vorzugsweise leistenförmig in Längsrichtung der Öffnungsränder P verlaufenden Rastvorsprünge U näher zur Seitenwand W angeordnet sein als die Rastvorsprünge L auf der Unterseite der Öffnungsränder P. In Übereinstimmung damit weist das in Fig. 1 - 3 dargestellte Ausführungsbeispiel der Klammer 1 einen in Gebrauchsstellung oberen Klemmschenkel 4 auf, der eine grössere Länge besitzt als der untere Klemmschenkel 5. Die Rastvorsprünge U, L können, wie es in Fig. 3 angedeutet ist, leicht hinterschnitten sein. Wie ebenfalls aus Fig. 3 ersichtlich ist, besitzen die hakenförmigen Anbindeteile 8, 9 eine Aussenkontur, die der Kontur der Rastvorsprünge U, L vorzugsweise angeglichen ist, und sind sie demnach gleichfalls leicht hinterschnitten.

Zur Montage wird die erfindungsgemässe Klammer 1 einfach leicht schräg an den Öffnungsrand angesetzt. Indem die Klammer wieder in ihre Lage quer zur Längserstreckung des Kabelkanals C zurückgedreht wird, gleiten die hakenförmigen Anbindeteile 8, 9 über die Rastvorsprünge U, L, wobei die Klammer fixiert wird. Die Elastizität der Klemmschenkel 4, 5 erleichtert das Verhaken der Anbindeteile 8, 9 mit den Rastvorsprüngen U, L. Die Elastizität der Klemmschenkel 4, 5 ist dabei derart bemessen, dass die montierten bzw. verhakten Klemmschenkel 4, 5 auch gegen ein unbeabsichtigtes Verschieben in Längsrichtung des Kabelkanals C gesichert sind. Zum Lösen der Verhakung werden die Spreizbügel 10, 11 von Hand gegen die Längsseiten 6, 7 der Klemmschenkel 4, 5 gepresst. Dabei dringen die keilförmig zueinander angeordneten Gleitflächen 12, 13 zwischen die Klemmschenkel 4, 5 in den Spalt 16 ein. Die einander zugewandten Längskanten der Klemmschenkel 4, 5 gleiten entlang der schrägen Gleitflächen 12, 13 nach oben bzw. nach unten. Dadurch werden die Klemmschenkel 4, 5 gegen eine elastische Rückstellkraft im wesentlichen senkrecht zur Längserstreckung des Brückenteils 2 und zur Längserstreckung des Kabelkanals C auseinander gespreizt, und die Verhakung der Anbindeteile 8, 9 mit den Rastvorsprüngen U, L wird gelöst. Nach dem Loslassen der Spreizbügel 10, 11 federn sie elastisch zurück und die Klemmbügel 4, 5 gehen wieder in ihre Ausgangsposition zurück, in der sie im wesentlichen parallel zueinander verlaufen.

Bei dem Ausführungsbeispiel der erfindungsgemässen Klammer 1 gemäss Fig. 1 - 3 sind beide Klemmschenkel 4, 5 an ihren Längsenden mit hakenförmigen Anbindeteilen 8, 9 versehen. Es versteht sich, dass es für die Funktion der Klammer auch ausreicht, wenn nur der in Gebrauchsstellung obere Klemmschenkel mit hakenförmigen Anbindeteilen ausgestattet ist. In diesem Fall trägt der an der flachen Unterseite des Öffnungsrands des Kabelkanals anliegende untere Klemmschenkel über einen Reibschluss zur Fixierung der montierten Klammer bei.

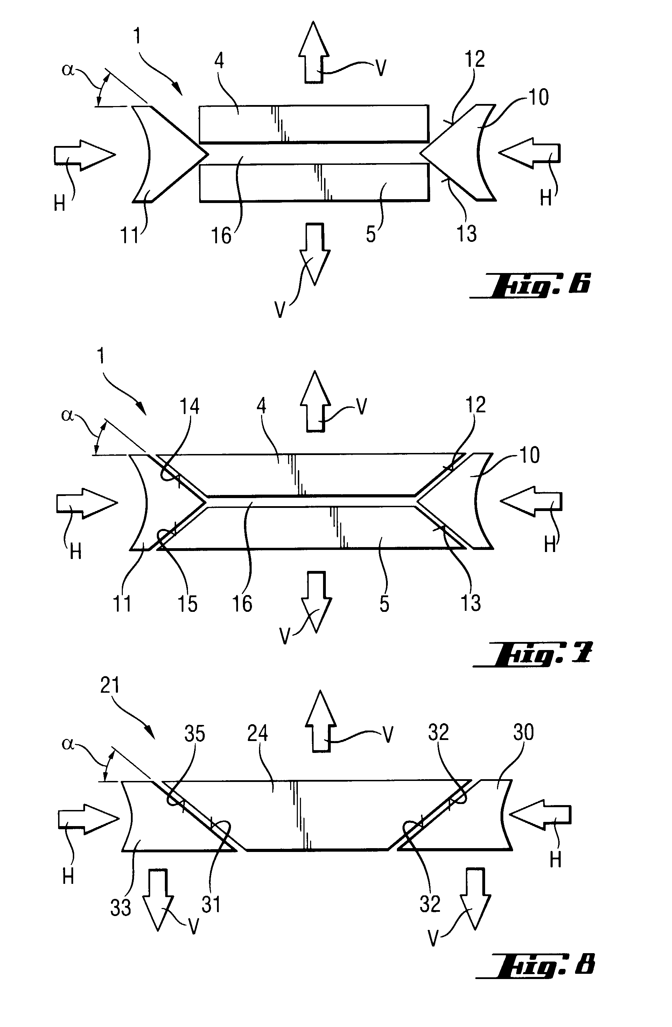

Fig. 4 und 5 zeigen ein zweites Ausführungsbeispiel der erfindungsgemässen Klammer, die gesamthaft mit dem Bezugszeichen 21 versehen ist. Die Klammer 21 weist ein längliches Brückenteil 22 auf, das aus Gründen der besseren Übersicht nur zur Hälfte seiner Längserstreckung dargestellt ist. Die nicht dargestellte zweite Hälfte des Brückenteils 22 ist identisch ausgebildet. Von einem Mittenabschnitt 23 des Brückenteils 22 erstreckt sich jeweils ein zentraler Klemmschenkel 24, der zwischen zwei federnden peripheren Klemmschenkeln 30, 31 angeordnet ist, die gleichfalls vom Mittenabschnitt 23 abragen und im wesentlichen parallel zu den Längsseiten 26, 27 des zentralen Klemmschenkels 24 verlaufen. Der zentrale Klemmschenkel 24 und die peripheren Klemmschenkel 30, 31 sind an ihren freien Längsenden mit hakenförmigen Anbindeteilen 28 bzw. 36, 37 ausgestattet. Dabei sind das hakenförmige Anbindeteil 28 des zentralen Klemmschenkels 24 und die Anbindeteile 36, 37 der peripheren Klemmschenkel 30, 31 von den zueinander umgebogenen freien Enden der Klemmschenkel 24, 30, 31 gebildet. Der zentrale Klemmschenkel 24 weist einen im wesentlichen trapezförmigen Querschnitt auf. Seine Längsseiten 26, 27 verlaufen im Abschnitt vor dem hakenförmigen Anbindeteil 28 von der Oberseite des Klemmschenkels 24 aus schräg nach einwärts und bilden schräge Gleitflächen 34, 35. An ihrer den Längsseiten 26, 27 des zentralen Klemmschenkels 24 gegenüberliegenden Seite weisen die peripheren Klemmschenkel 30, 31 Gleitflächen 32, 33 auf. Der Verlauf der Gleitflächen 32, 33 der peripheren Klemmschenkel 30, 31 ist gegenläufig zum Verlauf der schrägen Gleitflächen 34, 35 des zentralen Klemmschenkels 24. In ihrer Ausgangsstellung weisen die Gleitflächen 32, 33 der peripheren Klemmschenkel 30, 31 einen Abstand von den Gleitflächen 34, 35 des zentralen Klemmschenkels 24 auf. Dabei liegen die Einmündungen der Gleitflächen 32, 33 der peripheren Klemmschenkel 30, 31 in die Unterseite innerhalb der Projektion der Längsseiten 26, 27 des zentralen Klemmschenkels 24. An ihren dem zentralen Klemmschenkel 24 abgewandten Aussenseiten weisen die peripheren Klemmschenkel 30, 31 im Bereich ihrer Längsenden jeweils Griffmulden 38 auf.

Die Montage der Klammer 21 an einem Kabelkanal erfolgt analog zur Montage des anhand der Fig. 1 - 3 erläuterten Ausführungsbeispiels der Klammer. Soll die Klammer 21 wieder vom Öffnungsrand des Kabelkanals gelöst werden, wird sie mit einer Hand an den Griffmulden 38 an der Aussenseite der peripheren Klemmschenkel 30, 31 gefasst. Durch Zusammendrücken werden die peripheren Klemmschenkel 30, 31 gegen die Längsseiten 26, 27 des zentralen Klemmschenkels 24 gepresst. Dabei gleiten die schrägen Gleitflächen 32, 33 der peripheren Klemmschenkel 30, 31 an den schrägen Gleitflächen 34, 35 des zentralen Klemmschenkels 24 ab. Dadurch werden die Klemmschenkel 24, 30, 31 im wesentlichen senkrecht zur Längserstreckung des Brückenteils 22 gegen eine Rückstellkraft auseinandergespreizt und die Verhakung der Anbindeteile 28, 36, 37 mit den korrespondierenden Rastvorsprüngen am Öffnungsrand des Kabelkanals gelöst. Die Rückstellkraft der federnden Klemmbügel 24, 30, 31 ist dabei derart bemessen, dass im montierten Zustand der Klammer 21 eine gewisse Sicherheit gegen ein unbeabsichtigtes Verschieben in Längsrichtung des Kabelkanals gewährleistet ist.

Die schematischen Darstellungen der Fig. 6 - 8 dienen der Veranschaulichung der Prinzipe, die der Funktion der erfindungsgemässen Klammer zugrunde liegen können. Dabei zeigt Fig. 6 eine Klammer gemäss dem in den Fig. 1 - 3 dargestellten Ausführungsbeispiel. Die übereinander angeordneten Klemmschenkel sind mit 4 und 5 bezeichnet. Beidseits der Längsseiten der Klemmschenkel 4, 5 sind Spreizbügel 10, 11 angeordnet, die keilförmig zueinander geneigte Gleitflächen 12, 13 aufweisen. Die keilförmig angeordneten Gleitflächen 12, 13 schliessen mit der Oberseite der Klemmschenkel 4, 5 einen Winkel α ein, der zwischen etwa 10° und etwa 45°, vorzugsweise zwischen 15° und 35° liegt. In der Ausgangsstellung ragen die Keilspitzen leicht in den Spalt zwischen den Klemmschenkeln 4, 5. Durch Zusammenpressen der Spreizbügel 10, 11, was durch die einfach gezogenen Pfeile H angedeutet ist, dringen die keilförmig angeordneten Gleitflächen 12, 13 in den Spalt 16 zwischen den Klemmschenkeln ein. Die den Spalt 16 begrenzenden Kanten an den Längsseiten der Klemmbügel 4, 5 gleiten an den schrägen Gleitflächen 12, 13 im wesentlichen senkrecht nach oben bzw. nach unten, was in Fig. 6 durch die mit doppelter Linie gezeichneten Pfeile V angedeutet ist, und die Klemmschenkel 4, 5 werden auseinandergespreizt.

Fig. 7 zeigt ein Ausführungsbeispiel der erfindungsgemässen Klammer, das der Klammer 1 gemäss Fig. 1 - 3 und Fig. 6 weitgehend entspricht. Zum Unterschied sind die Seitenflächen der Klemmschenkel 4, 5 wenigstens bereichsweise nach innen geneigt und bilden Gleitflächen 14, 15. Die federnden Spreizbügel 10, 11 besitzen keilförmig angeordnete Gleitflächen 12, 13 und ragen in die von den Gleitflächen 14, 15 der Klemmschenkel 4, 5 gebildete, V-förmige Nut. Beim Zusammendrücken der Spreizbügel 10, 11, was durch die einfach gezogenen Pfeile H angedeutet ist, dringt die Keilspitze in den Spalt 16 zwischen den Klemmschenkeln 4, 5. Die im wesentlichen parallel zueinander verlaufenden Gleitflächen 12, 13 bzw. 14, 15 der Spreizbügel 10, 11 und der Klemmschenkel 4, 5 gleiten aneinander ab. Dadurch werden die Klemmbügel 4, 5 gemäss den mit doppelter Linie gezeichneten Pfeilen V nach oben bzw. nach unten auseinandergespreizt und geöffnet.

Fig. 8 zeigt das Prinzip, das dem Ausführungsbeispiel der Klammer gemäss Fig. 4 und 5 zugrunde liegt. Der zentrale Klemmschenkel 24 ist zwischen den beiden peripheren Klemmschenkeln 30, 31 angeordnet. Die einander zugewandten Längsseiten der Klemmschenkel 24, 30, 31 sind mit Gleitflächen 32, 34 bzw. 33, 35 ausgestattet. Beim Zusammendrücken der peripheren Klemmschenkel 30, 31, was durch die einfach gezogenen Pfeile H angedeutet ist, gleiten die Gleitflächen 32, 34 bzw. 33, 35 aneinander ab. Dadurch werden der zentrale Klemmschenkel 24 nach oben und die peripheren Klemmschenkel 30, 31 nach unten auseinandergespreizt, was jeweils durch die mit doppelter Linie gezeichneten Pfeile V angedeutet ist. Während in Fig. 8 das Prinzip am Beispiel einer Klammer mit einem zentralen Klemmschenkel und zwei peripheren Klemmschenkeln erläutert wurde, versteht es sich, dass die erfindungsgemässe Klammer auch nur zwei nebeneinander angeordnete Klemmschenkel aufweisen kann, deren einander zugewandte Längsseiten mit korrespondierend verlaufenden schrägen Gleitflächen ausgestattet sind. Beim Zusammenpressen der beiden Klemmschenkel gleiten diese entlang der Gleitflächen nach oben bzw. nach unten. Dadurch werden die Klemmschenkel auseinandergespreizt, und eine Verhakung von Anbindeteilen der Klemmschenkel an Rastvorsprüngen des Öffnungsrands eines Kabelkanals kann gelöst werden.

## Patentansprüche

1. Klammer für einen Kabelkanal, der an seiner offenen Seite, im Bereich der freien Enden seiner Seitenwände (W) nach innen abragende, leistenartige Öffnungsränder (P) aufweist, mit einem die offene Seite überbrückenden, länglichen Brückenteil (2; 22), das zu beiden Seiten eines Mittenabschnitts (3; 23) abragende Klemmschenkel (4, 5; 24, 30, 31) aufweist, wobei jeweils wenigstens einer der Klemmschenkel an seinem freien Längsende mit einem hakenartigen Anbindeteil (8, 9; 28. 36, 37) für die leistenartigen Öffnungsränder versehen ist, **dadurch gekennzeichnet**, dass beidseits des Mittenabschnitts (3; 23) wenigstens zwei Klemmschenkel (4, 5; 24, 30, 31) abragen, die mit Hilfe von integrierten Keilflächen (12, 13; 32, 33, 34, 35) im wesentlichen senkrecht zur Längserstreckung des Brückenteils (2, 22) und des Kabelkanals (C) ausrückbar und gegen eine Rückstellkraft auseinanderspreizbar sind.

2. Klammer nach Anspruch 1, dadurch gekennzeichnet, dass die integrierten Keilflächen (12, 13; 32, 33, 34, 35) mit der Quererstreckung des Brückenteils (2; 22) einen Winkel (α) einschliessen, der zwischen etwa 10° und etwa 45°, vorzugsweise zwischen 15° und 35° liegt.

3. Klammer nach Anspruch 1 oder 2, dadurch gekennzeichnet, dass die Keilflächen von zusammenwirkenden Gleitflächen (32, 33, 34, 35) an einander zugewandten Längsseiten der Klemmschenkel (24, 30, 31) gebildet sind.

4. Klammer nach Anspruch 3, dadurch gekennzeichnet, dass beidseits des Mittenabschnitts (23) je zwei periphere Klemmschenkel (30, 31) abragen, die im wesentlichen parallel zu den beiden Längsseiten (26, 27) eines zentralen Klemmschenkels (24) verlaufen, der einen im wesentlichen trapezförmige Querschnitt aufweist.

5. Klammer nach Anspruch 1 oder 2, dadurch gekennzeichnet, dass sich beidseits des Mittenabschnitts (3) zwei übereinander angeordnete Klemmschenkel (4, 5) erstrecken, die durch einen Längsspalt (16) voneinander getrennt sind und deren Längsseiten (6, 7) mit den integrierten Keilflächen zusammenwirken, die als V-förmig zueinander angeordnete Schrägflächen (12, 13) an elastischen Spreizbügeln (10, 11) ausgebildet sind, die vom Mittenabschnitt (3) abragen und beidseits der Längsseiten (6, 7) im wesentlichen parallel zu den Klemmschenkeln (4, 5) verlaufen.

6. Klammer nach Anspruch 5, dadurch gekennzeichnet, dass die Klemmschenkel (4, 5) einen im wesentlichen trapezförmigen Querschnitt aufweisen und an ihren Längsseiten (6, 7) zueinander geneigte Gleitflächen (14, 15) aufweisen, die eine im wesentlichen V-förmige Nut begrenzen.

7. Klammer nach einem der Ansprüche 4 bis 6, dadurch gekennzeichnet, dass die den Gleitflächen (32, 33, 34, 35; 12, 13) abgewandten Längsseiten der peripheren Klemmschenkel (30, 31) bzw. Spreizbügel (10, 11) mit Griffmulden (38) versehen sind.

8. Klammer nach einem der vorangehenden Ansprüche, dadurch gekennzeichnet, dass alle Klemmschenkel (4, 5; 24, 30, 31) mit hakenartigen Anbindeteilen (8, 9; 28, 36, 37) versehen sind, die von den abgewinkelten Endabschnitten der Klemmschenkel (4, 5; 24, 30, 31) gebildet sind, welche korrespondierend ausgebildete Rastvorsprünge (U, L) an der Ober- und Unterseite der Öffnungsränder (P) übergreifen.

9. Klammer nach Anspruch 8, dadurch gekennzeichnet, dass die Länge wenigstens zweier zusammengehöriger Klemmschenkel (4, 5; 24, 30, 31) verschieden ist und die abgewinkelten Endabschnitte (8, 9; 28, 36, 37) Rastvorsprünge (U, L) übergreifen, die in unterschiedlicher Entfemung von der zugehörigen Seitenwand (W) an der Ober- bzw. Unterseite der Öffnungsränder (P) des Kabelkanals (C) verlaufen.

10. Klammer nach Anspruch 8, dadurch gekennzeichnet, dass ein in Gebrauchslage oberer Klemmschenkel (4) eine grössere Länge aufweist als ein zugehöriger unterer Klemmschenkel (5).
